(19) Europäisches Patentamt / European Patent Office / Office européen des brevets

(11) **EP 4 317 058 A1**

(12) **EUROPEAN PATENT APPLICATION**
published in accordance with Art. 153(4) EPC

(43) Date of publication:
**07.02.2024 Bulletin 2024/06**

(21) Application number: **22780592.6**

(22) Date of filing: **25.03.2022**

(51) International Patent Classification (IPC):
$C01B\ 21/072^{(2006.01)}$    $C08K\ 3/28^{(2006.01)}$
$C08K\ 7/00^{(2006.01)}$    $C08L\ 101/00^{(2006.01)}$

(52) Cooperative Patent Classification (CPC):
**C01B 21/072; C08K 3/28; C08K 7/00; C08L 101/00**

(86) International application number:
**PCT/JP2022/014502**

(87) International publication number:
**WO 2022/210379 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021057169**

(71) Applicant: **Tokuyama Corporation**
**Shunan-shi, Yamaguchi 745-8648 (JP)**

(72) Inventors:
- **KURAMOTO, Akimasa**
  **Shunan-shi, Yamaguchi 745-8648 (JP)**
- **FUKUNAGA, Yutaka**
  **Shunan-shi, Yamaguchi 745-8648 (JP)**
- **CHIBURI, Masato**
  **Shunan-shi, Yamaguchi 745-8648 (JP)**
- **TAKAKUSAKI, Makoto**
  **Shunan-shi, Yamaguchi 745-8648 (JP)**

(74) Representative: **Bittner, Thomas L.**
**Boehmert & Boehmert**
**Anwaltspartnerschaft mbB**
**Pettenkoferstrasse 22**
**80336 München (DE)**

(54) **ALUMINUM NITRIDE GRANULAR POWDER AND RESIN COMPOSITION**

(57) An aluminum nitride granular powder is constituted by aluminum nitride sintered granules, the aluminum nitride granular powder having a maximum peak diameter of 30 $\mu$m to 200 $\mu$m in a volume-based particle diameter distribution obtained from maximum lengths of the aluminum nitride sintered granules measured with use of a dry particle image analyzer, with regard to the aluminum nitride sintered granules each of which has a particle diameter of not less than 30% of the maximum peak diameter, a ratio of the number of particles having an HS roundness value of 0.5 to 0.8 as measured with use of the dry particle image analyzer being not less than 15% relative to the aluminum nitride sintered granules each having the particle diameter.

FIG. 1

Miniscope    AL   D3.8   x3.0k   30 $\mu$m

EP 4 317 058 A1

**Description**

Technical Field

The present invention relates to a novel aluminum nitride granular powder containing aluminum nitride sintered granules. Specifically, provided is an aluminum nitride granular powder that contains sintered granules which have an irregular-shape particle configuration formed through partial connection of aluminum nitride granules, and that, in a case where a resin is filled with the aluminum nitride granular powder as a filler, is thus capable of imparting a high thermal conductivity to a resin composition even if the resin is filled with a relatively small amount of the aluminum nitride granular powder.

Background

Heat dissipation materials are widely used, as heat dissipation sheets or heat dissipation greases, for various electronic devices. As such heat dissipation materials, compositions in which silicone resins or silicone greases are filled with thermally conductive fillers are used. As such a thermally conductive filler, aluminum nitride has attracted attention since aluminum nitride is excellent in electrically insulating properties and has a high thermal conductivity.

Generally, it has been believed that filling a resin with a large amount of the filler described above is important in order to improve a thermal conductivity of a heat dissipation material. Further, using relatively large particles each having a particle diameter of several tens of $\mu$m to several hundreds of $\mu$m is effective in view of increasing a distance of a heat transfer path when the resin is filled with the filler. Thus, developed has been a granular powder that is obtained by sintering in which a particle diameter of an aluminum nitride powder is increased. It is believed that aluminum nitride particles constituting the aluminum nitride granular powder obtained through the sintering preferably have a spherical shape that is a particle configuration excellent in a property for filling a resin (see Patent Literature 1).

Citation List

Japanese Patent Application Publication Tokukai No. 2019-108236

Summary of Invention

Technical Problem

However, in order to fill a resin with a large amount of the aluminum nitride granular powder and increase a contact density between particles so as to improve a thermal conductivity of a resultant resin composition, an amount of the aluminum nitride granular powder with which the resin is filled needs to be increased. This leads to a problem of accordingly increasing a cost of the resin composition.

Thus, it is an object of the present invention to provide an aluminum nitride granular powder capable of imparting a high thermal conductivity to a resin composition even if the resin is filled with a relatively small amount of the aluminum nitride granular powder.

Solution to Problem

The inventors of the present invention conducted a diligent study in order to solve the foregoing problem and made the following finding: an aluminum nitride granular powder constituted by sintered granules each having a specific irregular shape allows a contact point between particles and a heat transfer path between the particles to act functionally, thereby being capable of imparting a high thermal conductivity to a resin composition even if a resin is filled with a small amount of the aluminum nitride granular powder, and the aluminum nitride granular powder makes it possible to attain the foregoing object. As a result, the inventors of the present invention have completed the present invention.

That is, an aspect of the present invention provides an aluminum nitride granular powder constituted by aluminum nitride sintered granules, the aluminum nitride granular powder having a maximum peak diameter of 30 $\mu$m to 200 $\mu$m in a volume-based particle diameter distribution obtained from maximum lengths of the aluminum nitride sintered granules measured with use of a dry particle image analyzer, with regard to the aluminum nitride sintered granules each of which has a particle diameter of not less than 30% of the maximum peak diameter, a ratio of the number of particles having an HS roundness value of 0.5 to 0.8 as measured with use of the dry particle image analyzer being not less than 15% relative to the aluminum nitride sintered granules each having the particle diameter.

Advantageous Effects of Invention

An aluminum nitride granular powder in accordance with an aspect of the present invention contains aluminum nitride granules each having an irregular-shape structure formed by connecting a plurality of sintered particles each having a substantially spherical shape. Such sintered granules increase a contact density between particles, resulting in increase of the number of heat transfer paths. The aluminum nitride granular powder containing the sintered granules in an amount equal to or larger than the above specific amount causes these sintered granules to functionally act when a resin is filled with the aluminum nitride granular powder to form a resin composition. This makes it possible to impart a high thermal conductivity to the resin composition even if the resin is filled with a relatively small amount of the aluminum nitride granular powder.

Note that, in a case where a conventional sintered granular powder constituted mainly by spherical aluminum nitride granules is used, in order to impart a high thermal conductivity to a resin composition, an amount of the sintered granular powder with which a resin is filled needs to be so large that the particles are in the closest packed structure.

Brief Description of Drawings

Fig. 1    is an SEM image of aluminum nitride granules in an aluminum nitride granular powder which was obtained in Example 1.

Fig. 2    is an image of representative aluminum nitride granules (irregular-shape particles) which were obtained in Example 1, as observed with use of a dry particle image ana-lyzer.

Fig. 3    is an SEM image of aluminum nitride granules in an aluminum nitride granular powder which was obtained in Example 2.

Fig. 4    is an image of representative aluminum nitride granules (irregular-shape particles) which were obtained in Example 2, as observed with use of a dry particle image ana-lyzer.

Fig. 5    is an image for illustrating an angle θ between arcs of contours of particles adjacent to each other at a valley portion that a sintered granule has.

Description of Embodiments

As described above, an aluminum nitride granular powder in accordance with an embodiment of the present invention is constituted by aluminum nitride sintered granules, the aluminum nitride granular powder having a maximum peak diameter of 30 μm to 200 μm in a volume-based particle diameter distribution obtained from maximum lengths of the aluminum nitride sintered granules measured with use of a dry particle image analyzer, with regard to the aluminum nitride sintered granules each of which has a particle diameter of not less than 30% of the maximum peak diameter, a ratio of the number of particles having an HS roundness value of 0.5 to 0.8 as measured with use of the dry particle image analyzer (hereinafter, also referred to as "irregular-shape particles") being not less than 15% relative to the aluminum nitride sintered granules each having the size. Note that, in the present specification, the term "granule" refers to a particle obtained by granulating a plurality of particles, and the term "powder" refers to gathered particles (a collection). Further, note that, in the present specification, the term "sintered granule" refers to a particle obtained by granulating a plurality of particles through sintering, and the term "granular powder" refers to a collection of particles that are granules.

A particle diameter of the aluminum nitride granular powder in accordance with an embodiment of the present invention has a maximum peak diameter within a range of 30 μm to 200 μm, preferably 50 μm to 150 μm. The maximum peak diameter here is a maximum peak diameter in a volume-based particle diameter distribution obtained from maximum lengths measured with use of a dry particle image analyzer. In order to more sufficiently exert an effect of improving a thermal conductivity with use of irregular-shape particles in a case where a resin is filled with the particles, the maximum peak diameter needs to fall within the above ranges. Note that, in the present specification, the term "maximum peak diameter" refers to a particle diameter that has a maximum peak strength, among particle diameters corresponding to respective peaks in the particle diameter distribution.

Note that the volume-based particle diameter distribution is obtained with use of a dry particle image analyzer.

In an embodiment of the present invention, HS roundness of an aluminum nitride sintered granule specifies irregularity of the shape of the particle. The HS roundness is measured with use of the dry particle image analyzer and is obtained by imaging, through a projected shadow, a shape of each of particles dispersed on an observation surface and calculating roundness with use of a resultant image. Further, with use of the dry particle image analyzer, it is also possible to measure the number of particles having diameters falling within a specific particle-diameter range selected.

In an embodiment of the present invention, the irregular-shape particle is formed by connecting respective portions of two or more spherical particles together and thus has a shape formed by the plurality of spherical particles.

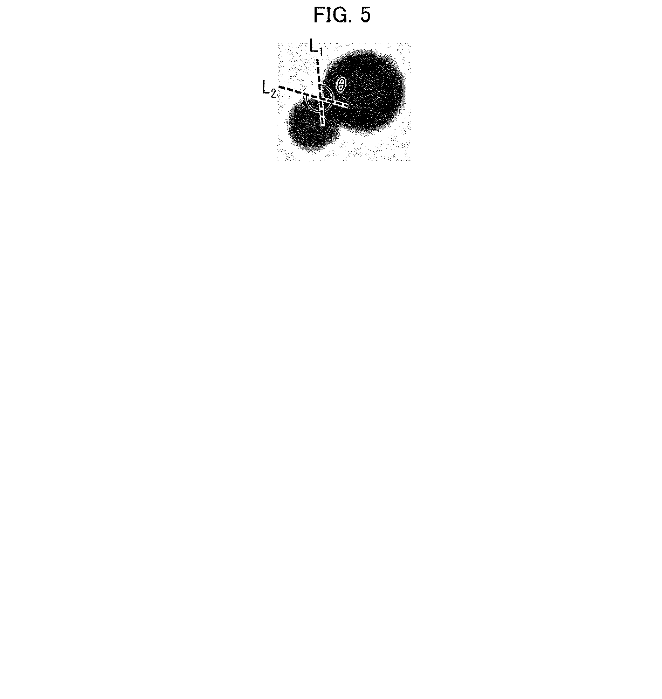

Accordingly, the irregular-shape particle exhibits a lower value of the HS roundness as compared with a conventional spherical sintered granule. In the irregular-shape particle, the respective portions of the plurality of spherical particles are connected with each other, and thus a valley portion is formed at a connection part between the spherical particles. The valley portion can be seen through the projected shadow. Note that the valley portion is formed by arcs of contours of the particles adjacent to each other at the connection part between the spherical particles. Although not limited, at the valley portion, an angle $\theta$ between the arcs of the contours of the particles adjacent to each other is preferably not less than 200° and more preferably not less than 225°. The valley portion having such an angle can further increase the number of heat transfer paths. In addition, the angle $\theta$ is, for example, preferably not more than 340° and more preferably not more than 315°. With reference to Fig. 5, the angle $\theta$ will be described. The angle $\theta$ refers to an angle in the projected shadow on a dark side, among angles that are formed between respective tangent lines $L_1$ and $L_2$ on two spherical particles forming the valley portion and that are at a contact point between the two spherical particles.

In the aluminum nitride granular powder in accordance with an embodiment of the present invention, it is important that with regard to sintered granules each having a particle diameter of not less than 30% of the maximum peak diameter, a ratio of the number of particles (irregular-shape particles) having HS roundness values of 0.5 to 0.8 as measured with use of a dry particle image analyzer is not less than 15%, preferably not less than 20%, relative to the sintered granules each having the particle diameter. In a case where the ratio of the number of the irregular-shape particles is lower than 15%, an effect of improving a thermal conductivity of a resin composition is not sufficiently exerted if a resin is filled with the irregular-shape particles. Further, the ratio of the irregular-shape particles has an upper limit which is not particularly limited. The aluminum nitride granular powder having a ratio of the irregular-shape particles of not more than 80% is easily manufactured and, in a case where a resin is filled with the aluminum nitride granular powder solely, tends to prevent an increase in viscosity of the resin composition.

Here, the ratio of the irregular-shape particles is specified with regard to the particles each having a size equal to or larger than the specific value, because an effect caused by structures of the irregular-shape particles is exerted by particles relatively large in size in the aluminum nitride granular powder.

In addition, it is preferable that crystal grains constituting the aluminum nitride sintered granules in an embodiment of the present invention have an average particle diameter of 3 $\mu$m to 18 $\mu$m, preferably 5 $\mu$m to 14 $\mu$m.

The aluminum nitride sintered granules in an embodiment of the present invention can be favorably produced through a method described below.

That is, the aluminum nitride sintered granules in an embodiment of the present invention are produced by carrying out the following steps: a molding step of molding an aluminum nitride powder to obtain molded granules having an average particle diameter of 20 $\mu$m to 190 $\mu$m; a calcining step of calcining the molded granules obtained in the molding step, the calcining being carried out in a nitrogen atmosphere, at a temperature of 1800°C to 1900°C, and for a period of time that allows the molded granules to be connected with each other in a state where maintained is a shape of an arc which is at least a portion of a circular arc forming a contour of each of the molded granules; and crushing sintered granules obtained in the calcining step.

In the molding step, as the aluminum nitride powder which is a raw material, a commercially available one which is conventionally known, such as one obtained through a direct nitridation method and one obtained through a reduction nitridation method, can be used. Such a raw material aluminum nitride powder has an average particle diameter of preferably 0.4 $\mu$m to 1.5 $\mu$m. The aluminum nitride molded granules can be obtained by the steps of: adding, to the raw material aluminum nitride powder, a rare-earth oxide such as yttrium oxide as a sintering auxiliary agent; adding an organic solvent and a binding agent to prepare a slurry product; and spraying the slurry product with use of a spray dryer.

In the calcining step, the aluminum nitride molded granules obtained in the molding step are, according to need, subjected to a degreasing treatment at a temperature of 400°C to 600°C in the air atmosphere and then are loaded to a setter made of boron nitride. Subsequently, the aluminum nitride molded granules are calcined for a predetermined period of time at a temperature of 1800°C to 1900°C in a nitrogen atmosphere. At this time, a boron nitride powder can be added in an amount that does not interfere with connection between the particles.

When the calcining temperature is not lower than 1800°C, a liquid phase from the sintering auxiliary agent seeps out to surfaces of the aluminum nitride molded granules. This results in a higher fusion density of between the granules. Further, when the calcining temperature is not higher than 1900°C, an increase in particle diameter due to the fusion between the particles is less likely to occur. This makes it easy to obtain granules each having a desired diameter.

The calcining time may be determined as appropriate depending on particle diameters of the molded granules so that the molded granules can be connected with each other in a state where maintained is a shape of an arc which is at least part of a circular arc forming a contour of each of the molded granules. For example, in a case where the molded granules have particle diameters of not less than 20 $\mu$m and less than 50 $\mu$m, it is appropriate that the calcining time is 8 hours to 9 hours. Meanwhile, in a case where the molded granules have particle diameters of not less than 50 $\mu$m, it is preferable that the calcining time is not less than 10 hours, typically, 10 hours to 12 hours.

Further, in the crushing step, an operation is performed to crush the calcined product obtained in a block form through the calcining step. A method for such crushing is not particularly limited, provided that, in the method, the crushing is performed to an extent that does not break structures of the irregular-shape particles. Specifically, a roll crusher can be used for preliminary crushing, and a ball mill, a vibrating mill, a grinding machine (Masscolloider), or the like can be used for main crushing to an extent that does not excessively break connection parts of the irregular-shape particles.

In addition, sieve classification in accordance with a maximum particle diameter that is acceptable depending on a thickness and the like of a resin composition to be used can be performed to adjust the particle diameters.

In addition, in order to form coating with an oxide film, a heat treatment can be performed, in an air atmosphere having an adjusted dew point, to an extent that does not cause oxidation to excessively proceed, specifically, to an extent that forms an oxide film having a thickness of approximately several nm.

A resin composition can be formed by filling a known resin, such as an epoxy resin or a silicone resin, with, as a filler, the aluminum nitride granular powder in accordance with an embodiment of the present invention. That is, an aspect of the present invention also encompasses the resin composition filled with, as a filler, the aluminum nitride granular powder described above. In this case, a resin can be filled with the aluminum nitride granular powder in accordance with an embodiment of the present invention solely but alternatively can be filled with the aluminum nitride granular powder in combination with a filler(s), such as another inorganic powder(s), e.g., aluminum oxide, boron nitride, zinc oxide, and/or silicon nitride.

In addition, regarding the particle diameter, a combination of the aluminum nitride granular powders having different particle diameters can be used in the resin composition. Alternatively, it is also possible to use a combination of the aluminum nitride granular powder and any one or more of the inorganic powders including another aluminum nitride powder and having a particle diameter different from that of the aluminum nitride granular powder in the resin composition. In this case, respective particle diameters and respective mixing ratios of the powders are preferably adjusted so as to make a combination of the particle diameters that can result in a packing state which is the closest possible to the closest packed state containing not less than 75% by volume of the powders in the resin composition.

That is, an embodiment of the present invention provides an aluminum nitride granular powder constituted by aluminum nitride sintered granules, the aluminum nitride granular powder having a maximum peak diameter of 30 $\mu$m to 200 $\mu$m in a volume-based particle diameter distribution obtained from maximum lengths of the aluminum nitride sintered granules measured with use of a dry particle image analyzer, with regard to the aluminum nitride sintered granules each of which has a particle diameter of not less than 30% of the maximum peak diameter, a ratio of the number of particles having an HS roundness value of 0.5 to 0.8 as measured with use of the dry particle image analyzer being not less than 15% relative to the aluminum nitride sintered granules each having the particle diameter.

Crystal grains constituting the sintered granules have an average particle diameter of preferably 3 $\mu$m to 18 $\mu$m.

In addition, in an image obtained with use of the dry particle image analyzer, the sintered granules each preferably have at least one valley portion.

In addition, an aspect of the present invention provides a resin composition filled with, as a filler, the aluminum nitride granular powder described above.

Examples

The following will describe an embodiment of the present invention in more detail on the basis of Examples, but the present invention is not limited to Examples.

In Examples and Comparative Examples, measurement methods were performed as described below.

1) Average particle diameter

An average particle diameter was measured with use of MICROTRACK-HRA manufactured by Nikkiso Co., Ltd. through a laser diffraction method. To a solution obtained by adding 5% aqueous sodium pyrophosphate solution to 90 ml of water, an aluminum nitride powder was added to obtain a mixture. The mixture was subjected to dispersion in a homogenizer for 3 minutes at 200 mA, and a product obtained as a result of the dispersion was measured. An average particle diameter was obtained from D50 in the above method. Note that the D50 here is a value on a volume-based particle diameter distribution curve.

2) Maximum peak diameter

A maximum peak diameter was obtained through measurement with use of a dry particle image analyzer (Morphologi G3 manufactured by Malvern).

A measurement sample was put in a sample cartridge with use of a 5 mm$^3$ measurement spatula. The sample was dispersed from the sample cartridge onto a glass plate under the following conditions: a dispersion pressure of 4 bar; a compressed air application time of 10 ms; and a standstill time of 60 s.

The maximum peak diameter was obtained from a volume-based particle diameter distribution which was obtained from maximum lengths of respective particles.

3) Average particle diameter of crystal grains

From a 3000-fold image obtained as a result of observation with use of an SEM (TM3030 manufactured by Hitachi High-Technologies Corporation), 20 aluminum nitride sintered granules in an embodiment of the present invention were randomly selected, and 20 crystal grains in each of the aluminum nitride sintered granules were randomly selected within a field of view. Crystal grain diameters (maximum diameters of the crystal grains) were measured. The same measurement was performed for 10 fields of view, and an average value of all the measurement values was calculated.

4) HS roundness

HS roundness was calculated through measurement with use of the dry particle image analyzer (Morphologi G3 manufactured by Malvern).
A measurement sample was put in a sample cartridge with use of a 5 mm$^3$ measurement spatula. The sample was dispersed from the sample cartridge onto a glass plate under the following conditions: a dispersion pressure of 4 bar; a compressed air application time of 10 ms; and a standstill time of 60 s.
The HS roundness is a ratio of an area of a projected object relative to a square of a perimeter length of the projected object. The HS roundness was automatically calculated according to the following formula by a device.

$$HS\ roundness = 4 \times \pi \times Area/Perimeter^2$$

A ratio of the number of particles having the HS roundness values of 0.5 to 0.8 was calculated by dividing, by the number of particles having particle diameters of not less than 30% of the maximum peak diameter in an observed area, the number of the particles satisfying the HS roundness value of 0.5 to 0.8 among the particles having particle diameters of not less than 30% of the maximum peak diameter.

5) Observation of valley portion

The valley portion of each of the particles was visually observed in an image displayed at the time of measurement with use of the dry particle image analyzer (Morphologi G 3 manufactured by Malvern).

Example 1

To 100 parts by weight of an aluminum nitride (AIN) powder (H-grade manufactured by To-kuyama Corporation), (i) 3 parts by weight of yttrium oxide (manufactured by NIPPON YTTRIUM CO., LTD.) as a sintering auxiliary agent, (ii) 0.1 parts by weight of hexaglycerin monooleate as a dispersing agent, and (iii) a solvent were added, and were dispersed, so that a slurry was obtained. The slurry was granulated through spray drying, so that aluminum nitride molded granules having an average particle diameter of 76 $\mu$m was obtained. The aluminum nitride molded granules were degreased at 580°C for 3 hours.
The aluminum nitride molded granules thus degreased were loaded to a boron nitride setter and then were calcined at a calcining temperature of 1800°C for 10 hours, so that aluminum nitride sintered granules were obtained.
The granules after the sintering were in a block form. Thus, the granules in a block form were preliminarily crushed with use of a roll crusher and then crushed to be in a powder form with use of a grinding machine under the following conditions: a gap between grindstones was 750 $\mu$m; and a rotational speed of grindstones was 1000 rpm.
After that, resultant aluminum nitride sintered granules in a powder form were classified with use of a vibration sieving device having a sieve opening of 150 $\mu$m.
A resultant aluminum nitride granular powder had a maximum peak diameter of 90 $\mu$m. A ratio of the number of particles having HS roundness values of 0.5 to 0.8 was calculated. Table 1 shows the result of calculation.

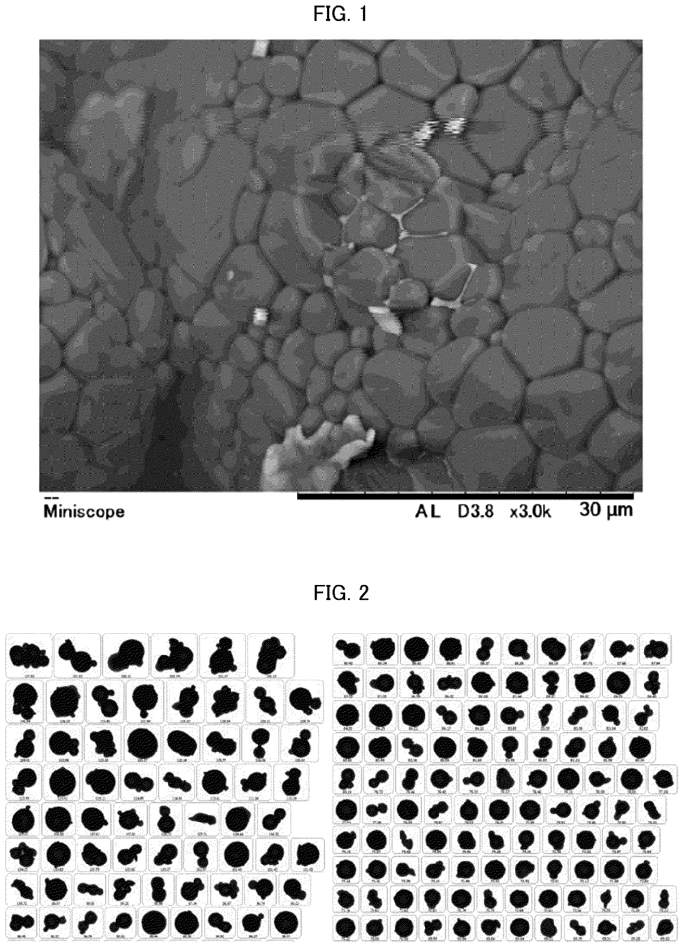

Fig. 1 shows an example of an SEM observation image of the aluminum nitride sintered granules which were obtained in the present Example. An average particle diameter of crystal grains was calculated with use of the SEM observation image. Furthermore, Fig. 2 shows some of particle images obtained with use of the dry particle image analyzer.

Example 2

An aluminum nitride granular powder was obtained as in Example 1 except that the calcining temperature in Example 1 was changed to that shown in Table 1. The powder obtained was subjected to various types of measurement according to the above-described methods. Table 1 shows the result of the measurement.

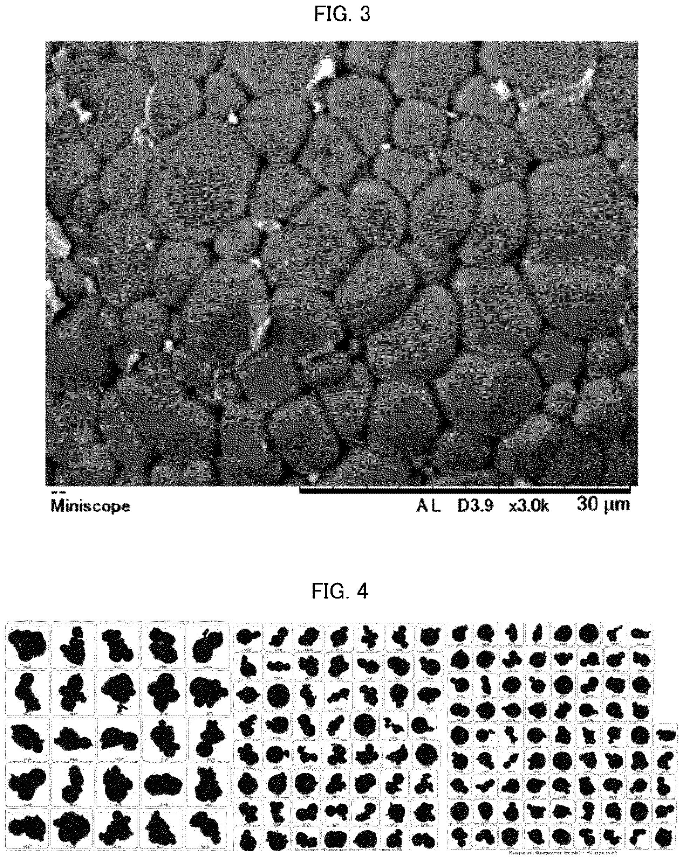

Fig. 3 shows an example of an SEM observation image of aluminum nitride sintered granules which were obtained in the present Example. An average particle diameter of crystal grains was calculated with use of the SEM observation image. Furthermore, Fig. 4 shows some of particle images obtained with use of the dry particle image analyzer. Then, 20 particles whose images were displayed were randomly selected, and an angle $\theta$ between tangent lines at a valley portion of each of the particles was measured. As a result, the minimum value of the angle $\theta$ was 253°, and the maximum value of the angle $\theta$ was 302°.

Comparative Example 1

An aluminum nitride granular powder was obtained as in Example 1 except that the calcining temperature and the crushing conditions in Example 1 were changed to those shown in Table 1. A ratio of the number of the particles having HS roundness values of 0.5 to 0.8 measured with use of the dry particle image analyzer was 8%. Accordingly, an aluminum nitride granular powder in accordance with an embodiment of the present invention was not obtained.

Comparative Example 2

Conditions were set to be the same as those in Example 1 except that the calcining temperature in Example 1 was changed to that shown in Table 1. As a result, granules were collected in a block form and were difficult to crush, due to an effect of the sintering auxiliary agent.

[Table 1]

| | | | Example 1 | Example 2 | Comparative Example 1 | Comparative Example 2 |
|---|---|---|---|---|---|---|
| Production condition | Aluminum nitride molded granule | Average particle diameter | (µm) | 76 | 76 | 91 | 76 |
| | Degreasing condition | Calcining temperature | (°C) | 580 | 580 | 580 | 580 |
| | | Process time | (Hr) | 3 | 3 | 3 | 3 |
| | Calcining condition | Calcining temperature | (°C) | 1800 | 1830 | 1770 | 1950 |
| | | Process time | (Hr) | 10 | 10 | 7 | 10 |
| | Crushing condition | Grindstone rotational speed | (rpm) | 1000 | 1000 | 1800 | - |
| | | Gap between grindstones | (µm) | 750 | 750 | 240 | - |
| | Classification condition | Sieve opening | (µm) | 150 | 150 | 150 | - |
| Physical property | Maximum peak diameter | | (µm) | 90 | 125 | 88 | - |
| | Ratio of number of particles with HS roundness values of 0.5 to 0.8 | | (%) | 23 | 62 | 8 | - |
| | Crystal grain average particle diameter | | (µm) | 6.5 | 8.1 | 2.5 | - |

[Thermal Conductivity of Resin Composition]

The aluminum nitride granular powder obtained in Example 1 or Comparative Example 1, a spherical aluminum oxide powder having a $D_{50}$ value of 30 µm, a spherical aluminum nitride powder having a $D_{50}$ value of 1 µm, and a spherical aluminum oxide powder having a $D_{50}$ value of 0.4 µm were mixed at a volume ratio of 1:1:1:0.036. A resultant powder mixture was mixed into a silicone resin (CY52-276A, B manufactured by Dow Toray Co., Ltd.) so that an amount of the powder mixture with which the silicone resin was filled was 81% by volume. The powder mixture was mixed into the silicone resin by kneading with use of a mortar, so that a resin composition was obtained. The resin composition was charged into a mold and was subjected to hot press at 80°C, for 1 hour, and at 1 ton, so that a sheet product having a thickness of 1 mm was obtained. A thermal conductivity of the sheet product was measured. A result of the measurement of the thermal conductivity showed that the resin composition obtained with use of the aluminum nitride granular powder in Example 1 had a thermal conductivity which was 1.13 times as large as that of the resin composition obtained with use of the aluminum nitride granular powder in Comparative Example 1.

## Claims

1. An aluminum nitride granular powder constituted by aluminum nitride sintered granules, the aluminum nitride granular powder having a maximum peak diameter of 30 $\mu$m to 200 $\mu$m in a volume-based particle diameter distribution obtained from maximum lengths of the aluminum nitride sintered granules measured with use of a dry particle image analyzer,

   - with regard to the aluminum nitride sintered granules each of which has a particle diameter of not less than 30% of the maximum peak diameter, a ratio of the number of particles having an HS roundness value of 0.5 to 0.8 as measured with use of the dry particle image analyzer being not less than 15% relative to the aluminum nitride sintered granules each having the particle diameter.

2. The aluminum nitride granular powder according to claim 1, wherein crystal grains constituting the sintered granules have an average particle diameter of 3 $\mu$m to 18 $\mu$m.

3. The aluminum nitride granular powder according to claim 1 or 2, wherein, in an image obtained with use of the dry particle image analyzer, the sintered granules each have at least one valley portion.

4. A resin composition filled with, as a filler, the aluminum nitride granular powder according to any one of claims 1 to 3.

FIG. 1

Miniscope                AL   D3.8   x3.0k   30 μm

FIG. 2

FIG. 3

FIG. 4

## FIG. 5

# EP 4 317 058 A1

## INTERNATIONAL SEARCH REPORT

International application No.

**PCT/JP2022/014502**

### A. CLASSIFICATION OF SUBJECT MATTER

*C01B 21/072*(2006.01)i; *C08K 3/28*(2006.01)i; *C08K 7/00*(2006.01)i; *C08L 101/00*(2006.01)i
FI: C01B21/072 R; C08K3/28; C08K7/00; C08L101/00

According to International Patent Classification (IPC) or to both national classification and IPC

### B. FIELDS SEARCHED

Minimum documentation searched (classification system followed by classification symbols)

C01B21/072; C08K3/28; C08K7/00; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 5877684 B2 (TOKUYAMA CORP) 08 March 2016 (2016-03-08)<br>claims 1-4, paragraphs [0069], [0089], fig. 2 | 1-4 |
| X | WO 2014/118993 A1 (TOKUYAMA CORP) 07 August 2014 (2014-08-07)<br>claims 1, 5-6, paragraphs [0001], [0035]-[0039], [0069], fig. 2 | 1-4 |
| X | JP 2006-206393 A (MITSUI CHEMICALS INC) 10 August 2006 (2006-08-10)<br>claims 1, 4, 7, paragraphs [0052]-[0053] | 1-4 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | International application No.<br>**PCT/JP2022/014502** |
|---|---|---|

| Patent document<br>cited in search report | Publication date<br>(day/month/year) | Patent family member(s) | Publication date<br>(day/month/year) |
|---|---|---|---|
| JP 5877684 B2 | 08 March 2016 | JP 2013-87042 A<br>claims 1-6, paragraphs [0039], [0069], [0089], fig. 2 | |
| WO 2014/118993 A1 | 07 August 2014 | US 2015/0376009 A1<br>claims 1, 5-6, paragraphs [0001], [0046]-[0050], [0083], fig. 2<br>EP 2952476 A1<br>CN 104968601 A<br>KR 10-2015-0112938 A | |
| JP 2006-206393 A | 10 August 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019108236 A